# EUROPÄISCHE PATENTSCHRIFT

(11) **EP 0 782 749 B1**
(45) Veröffentlichungstag und Bekanntmachung des Hinweises auf die Patenterteilung: **29.04.1998**
(21) Anmeldenummer: 95931895.7
(22) Anmeldetag: 21.09.1995
(51) Int. Cl.: G21C 1/08, G21C 15/02

(54) **NATURUMLAUFREAKTOR, INSBESONDERE SIEDEWASSERREAKTOR, UND VERFAHREN ZUR REGULIERUNG DES KERNKÜHLMITTELDURCHSATZES EINES NATURUMLAUFREAKTORS**
NATURAL CIRCULATION REACTOR, ESPECIALLY BOILING WATER REACTOR, AND PROCESS FOR REGULATING THE CORE COOLANT FLOW RATE OF A NATURAL CIRCULATION REACTOR
REACTEUR A CIRCULATION NATURELLE, NOTAMMENT REACTEUR A EAU BOUILLANTE, ET PROCEDE DE REGULATION DU DEBIT DU FLUIDE DE REFROIDISSEMENT DU C UR D'UN REACTEUR A CIRCULATION NATURELLE

(30) Priorität: 21.09.1994 DE 4433702
(43) Veröffentlichungstag der Anmeldung: 09.07.1997
(73) Patentinhaber: SIEMENS AKTIENGESELLSCHAFT, 80333 München (DE)
(72) Erfinder: PALAVECINO, Carlos, D-63263 Neu Isenburg (DE); SCHMIDT, Herbert, D-64390 Erzhausen (DE)
(86) Internationale Anmeldenummer: DE9501298
(87) Internationale Veröffentlichungsnummer: WO9609628

(56) Entgegenhaltungen:
- EP-A- 0 403 222
- DE-A- 1 804 371
- DE-B- 1 094 381
- FR-A- 1 136 490
- US-A- 4 877 574
- DATABASE WPI, Week 8838, Derwent Publications Ltd., London, GB; AN 88-268453 & JP,A,63 196 884 (HITACHI) 15. August 1988
- PATENT ABSTRACTS OF JAPAN vol. 13, no. 316 (P-900) 18. Juli 1989 & JP,A,01 086 093 (TOSHIBA) 30. März 1989

## Beschreibung

Naturumlaufreaktor, insbesondere Siedewasserreaktor, und Verfahren zur Regulierung des Kernkühlmitteldurchsatzes eines Naturumlaufreaktors

Die Erfindung betrifft einen Naturumlaufreaktor, insbesondere einen Siedewasserreaktor, mit einem Reaktordruckbehalter, einem Reaktorkern und einem den Reaktorkern umschließenden Kernmantel, welcher innerhalb des Reaktordruckbehalters angeordnet ist und mindestens eine Eintrittsöffnung und eine Austrittsöffnung für Kernkühlmittel hat, sowie ein Verfahren zur Regulierung des Kernkühlmitteldurchsatzes durch einen Reaktorkern eines Naturumlaufreaktors.

Der Umlauf von Kühlmittel in einem Kernreaktor, insbesondere in einem Siedewasserreaktor, kann auf verschiedene Arten erfolgen. Bei einem Naturumlaufreaktor wird das Kühlmittel, insbesondere Kühlwasser, aufgrund einer Dichtedifferenz zwischen Kühlmittel in dem Reaktorkern und Kühlmittel in einem außerhalb des Reaktorkerns liegenden Rückströmraum in einem Naturumlauf gehalten. Innerhalb des Reaktorkerns ist das Kühlmittel wärmer als innerhalb des Rückströmraums und durch Dampfblasenbildung zudem wesentlich leichter. Bekannt sind Siedewasserreaktoren nach dem Naturumlaufprinzip mit einer elektrischen Kraftwerksleistung von unter 100 MW. Siedewasserreaktoren größerer elektrischer Kraftwerksleistung werden mit einem Zwangsumlauf des Kernkühlmittels betrieben. Hierbei wird das Kernkühlmittel über außerhalb oder innerhalb des Reaktordruckbehälters angeordnete Umwälzpumpen umgewälzt. Unabhängig von der Lage von in den Reaktorkern eingefahrenen Steuerelementen läßt sich durch eine Steuerung der Umwälzpumpen der Kernkühlmitteldurchsatz durch den Reaktorkern hindurch einstellen. Diese Einstellung des Kernkühlmitteldurchsatzes ermöglicht ein besseres Verhalten des Kernreaktors, insbesondere bei der Beherrschung von Störfällen, als es bei nach dem Naturumlaufprinzip arbeitenden Siedewasserreaktoren mit sich selbsttätig in Abhängigkeit der Reaktorleistung einstellenden Kernkühlmitteldurchsatz ist.

In der DE-A-1 804 371 ist ein mit Natrium gekühlter Kernreaktor beschrieben, der in jeweilige Kühlkanäle angeordnete Brennelemente zur Erzeugung thermischer Energie aufweist. Die Durchströmung der Kühlkanäle mit dem Kühlmittel, dem Natrium, wird individuell über jeweilige Durchflußregler, in Form von Blenden, geregelt. Die Regelung erfolgt so, daß immer alle Durchflußregler gleichzeitig und auf gleiche Art betätigt werden. Hiermit soll dem über einem längeren Zeitraum stattfindenden Abbrand der Brennelemente zur Anpassung der Leistungsverteilung entgegengewirkt werden.

Die DE-A-1 071 854 behandelt einen gasgekühlten Kernreaktor mit Brennelementen, die jeweils einzelnen in einem entsprechenden Kanal angeordnet sind. Zur verbesserten Ausnutzung der durch die Brennelemente erzeugten thermischen Energie werden die Brennelemente, d.h. die Kanäle, in unterschiedliche Gruppen eingeteilt. Hierbei wird der Kühlmitteldurchsatz durch die Kanäle für jede Gruppe individuell über Schieber oder Blenden geregelt.

Die in der DE-A-1 071 854 und der DE-A-1 804 371 angegebene Durchsatzregelung bezieht sich jeweils ausschließlich auf die direkte Regelung des Kühlmitteldurchsatzes der Kühlkanäle der Brennelemente und hat ausschließlich eine möglichst vollständige Ausnutzung der thermischen Energie der Brennelemente durch Ausgleich unterschiedlicher geometrischer und zeitlicher Bedingungen der Brennelemente zur Aufgabe.

Aufgabe der Erfindung ist es, einen Naturumlaufreaktor, insbesondere einen Siedewasserreaktor, großer Leistung anzugeben, bei dem eine vorgebbare Einstellung des Kernkühlmitteldurchsatzes möglich ist. Eine weitere Aufgabe der Erfindung ist es, ein Verfahren zur Regulierung des Kernkühlmitteldurchsatzes durch einen Reaktorkern eines Naturumlaufreaktors anzugeben.

Erfindungsgemäß erfolgt die Lösung der erstgenannten Aufgabe durch einen Naturumlaufreaktor, insbesondere einen Siedewasserreaktor, mit einem Reaktordruckbehälter, einem Reaktorkern und einem den Reaktorkern umschließenden Kernmantel, welcher innerhalb des Reaktordruckbehälters angeordnet ist und mindestens eine Eintrittsöffnung und eine Austrittsöffnung für Kernkühlmittel hat, wobei ein zwischen dem Kernmantel und dem Reaktordruckbehälter gebildeter und in den Kernmantel durch die Eintrittsöffnung führender Strömungsweg für Kernkühlmittel, insbesondere Kühlwaser, einen Strömungsquerschnitt hat und in dem Strömungsweg zumindest ein Drosselelement angeordnet ist, durch welches der Strömungsquerschnitt zur Regelung des Kernkühlmitteldurchsatzes veränderbar ist.

Durch eine Vergrößerung bzw. Verkleinerung des Strömungsquerschnittes mittels des Drosselelementes ist eine Regelung des Kernkühlmitteldurchsatzes bei einem Siedewasserreaktor mit hoher Leistung, beispielsweise von 600 MW elektrischer Leistung, möglich. Damit werden die Vorteile der Regelung des Kühlmitteldurchsatzes eines im Zwangsumlauf betriebenen Kernreaktor nunmehr ebenfalls bei einem nach dem Naturumlaufprinzip betriebenen Kernreaktor erreicht, wobei zudem auf Umwälzpumpen verzichtet werden kann. Bei einer schnellen Leistungssteuerung in einem Störfall, insbesondere bei einer Schnellabschaltung des Siedewasserreaktors, kann durch Verringerung des Strömungsquerschnittes die Leistung von 100 % auf beispielsweise etwa 40 % heruntergefahren werden. Als veränderbarer Strömungsquerschnitt eignen sich beispielsweise der zwischen dem Reaktordruckbehälter und dem Kernmantel gebildete Ringraum sowie der Gesamtquerschnitt der Eintrittsöffnung des Kernmantels am Boden des Reaktordruckbehälters.

Vorzugsweise ist das Drosselelement ein Schwellkörper. Der Schwellkörperkann als ein elastischer Balg ausgeführt sein, welcher durch ein Druckmedium, beispielsweise Druckluft oder ein Hydraulikfluid, ausgedehnt oder verkleinert wird, wodurch der Strömungsquerschnitt des Strömungsweges verändert wird. Ein solcher Balg ist einfach herzustellen, mechanisch stabil und gegenüber den Bedingungen innerhalb des Reaktordruckbehälters beständig ausführbar.

Bevorzugt ist das Drosselelement an einer Wand des Reaktordruckbehälters befestigt. Hierdurch ist eine Steuerung des Drosselelementes unmittelbar durch die Wand hindurch, insbesondere über ein Druckmedium, gewährleistet. Zudem kann ggf. eine Wartung des Drosselelementes durch die Wand hindurch erfolgen, ohne den Reaktordruckbehälter öffnen zu müssen.

Das Drosselelement ist alternativ zu vorstehend beschriebenen Ausführung vorzugsweise als eine um eine Drehpunkt drehbare Klappe ausgebildet. Die Klappe ist um den Drehpunkt so befestigt, daß sie bei Ausfall einer zu ihrer Bedienung vorgesehenen Steuerung, insbesondere in einem Störfall, aufgrund ihres Eigengewichtes und/oder des zirkulierenden Kühlmittels, insbesondere Kühlwasser, in eine den Strömungsquerschnitt verkleinernde Position gedreht wird, wodurch eine Leistungsreduzierung des Kernreaktors erfolgt und dieser somit in einen sicheren Zustand geführt wird.

Der Drehpunkt liegt bevorzugt an dem Kernmantel, insbesondere an einem Ende der drehbaren Klappe. Durch das im Druckbehälter zirkulierende Kernkühlmittel wird somit ständig ein Drehmoment auf die Klappe ausgeübt, welches zu einer in Strömungsrichtung gerichteten Drehrichtung der Klappe führt.

Die Klappe ist vorzugsweise durch eine Hebevorrichtung bewegbar, welche insbesondere einen mit Druckluft betreibbaren Kolben oder einen Klinkenschrittheber aufweist. Die Klinkenschritt-Hebevorrichtung ist bevorzugt oberhalb der Klappe angeordnet und mit dieser über einen Seilzug oder eine Stange verbunden, so daß die Klappe beliebig drehbar ist. Der Klinkenschrittheber kann auf dem Deckel des Reaktordruckbehälters angeordnet sein, wobei nur eine Durchführung mit geringem Querschnitt durch den Deckel zur Verbindung des Klinkenschritthebers mit der Klappe erforderlich ist. Die innerhalb des Reaktordruckbehälters angeordnete Mechanik der Hebevorrichtung, insbesondere eine Befestigungsvorrichtung an der Klappe sowie der Seilzug oder die Stange, ist mechanisch besonders einfach und robust ausführbar, so daß Wartungsarbeiten an der Hebevorrichtung innerhalb des Reaktordruckbehälters weitgehend entfallen. Eine Hebevorrichtung mit einem pneumatisch oder hydraulisch betreibbaren Kolben kann sowohl unterhalb als auch oberhalb der Klappe angeordnet sein und bewirkt ebenfalls eine beliebige Drehung der Klappe. Sie ist konstruktiv einfach und wartungsarm ausführbar.

Das Drosselelement kann in der Umgebung der Eintrittsöffnung angeordnet sein, so daß die Eintrittsöffnung durch das Drosselelement zumindest teilweise verschließbar ist. Diese Anordnung des Drosselelementes kann sowohl außerhalb als auch innerhalb des Kernmantels erfolgen.

Für den Fall, daß die Eintrittsöffnung in einem Bodenbereich des Reaktordruckbehälters angeordnet ist, ist das Drosselelement bevorzugt durch den Boden des Reaktordruckbehälters hydraulisch, pneumatisch oder elektrisch steuerbar und insbesondere entlang einer Hauptachse des Reaktordruckbehälters verschiebbar. Eine hydraulische oder pneumatische Steuerung des Drosselelementes kann sowohl eigenmedium- als auch fremdmediumbetrieben erfolgen.

Bevorzugt ist das Drosselelement eine Platte, insbesondere eine Leitschaufelplatte oder eine Schieberplatte. Die Platte kann parallel zur Hauptachse des Reaktordruckbehälters und somit im wesentlichen parallel zum Kernmantel verlaufen oder gegenüber der Hauptachse als geneigte Leitschaufelplatte angeordnet sein. Eine parallel zur Hauptachse verlaufende Platte ist bevorzugt als eine Schieberplatte ausgeführt, welche bei einer schnellen Steuerung in einem Störfall aufgrund ihres Eigengewichtes in eine die Eintrittsöffnung zumindest teilweise verschließende Position gelangt. Hierdurch erfolgt in einem Störfall eine Drosselung des Kernkühlmitteldurchsatzes und dadurch eine Leistungsreduktion des Kernreaktors. Der Antrieb der Platte ist bevorzugt außerhalb des Bodens des Reaktordruckbehälters angeordnet, so daß Wartungsarbeiten an dem Drosselelement weitgehend außerhalb des Reaktordruckbehalters durchgeführt werden können.

Die Lösung der auf ein Verfahren gerichteten Aufgabe wird durch ein Verfahren zur Regulierung des Kernkühlmitteldurchsatzes durch einen Reaktorkern eines Naturumlaufreaktors, insbesondere eines Siedewasserreaktors, mit einem Reaktordruckbehälter und einem den Reaktorkern umschließenden Kernmantel, welcher innerhalb des Reaktordruckbehälters angeordnet ist und mindestens eine Eintrittsöffnung und eine Austrittsöffnung für Kernkühlmittel hat, dadurch erreicht, daß ein Strömungsquerschnitt eines zwischen dem Kernmantel und dem Reaktordruckbehälter gebildeten und in dem Kernmantel durch die Eintrittsöffnung weiterführenden Strömungsweg durch zumindest ein Drosselelement eingestellt wird.

Hierdurch ist auf einfache und zuverlässige Weise eine Regelung des Kernkühlmitteldurchsatzes für einen im Naturumlauf betriebenen Kernreaktor, insbesondere Siedewasserreaktor, mit großer elektrischer Leistung, von beispielsweise über 600 MW, gegeben. Die Regelung des Kernkühlmitteldurchsatzes ist zuverlässig durchführbar und kann bei einer Verkleinerung des Strömungsquerschnittes in einem Störfall zu einer Leistungsreduzierung bis 60 % führen. Gegenüber einer Regulierung des Kernkühlmitteldurchsatzes durch Verwendung von Umwälzpumpen wird durch das Verfahren ein höherer Grad an passiver Sicherheit erreicht.

Anhand der Zeichnung werden der Naturumlaufreaktor, insbesondere Siedewasserreaktor, sowie das Verfahren zur Regulierung des Kernkühlmitteldurchsatzes näher erläutert. Es zeigen:
- FIG 1: einen Längsschnitt durch einen Reaktordruckbehälter eines Naturumlaufreaktors,
- FIG 2: in einem Längsschnitt durch den Reaktordruckbehälter einen Ausschnitt im unteren Bereich des Reaktordruckbehälters,
- FIG 3: einen Längsschnitt des Reaktordruckbehälters im Bodenbereich des Reaktordruckbehälters und
- FIG 4: eine Reaktorumwälzregelkennlinie in Abhängigkeit von dem Strömungsquerschnitt.

In den Figuren sind nur die zur nachfolgenden Erläuterung notwendigen Komponenten des Naturumlaufreaktors dargestellt.

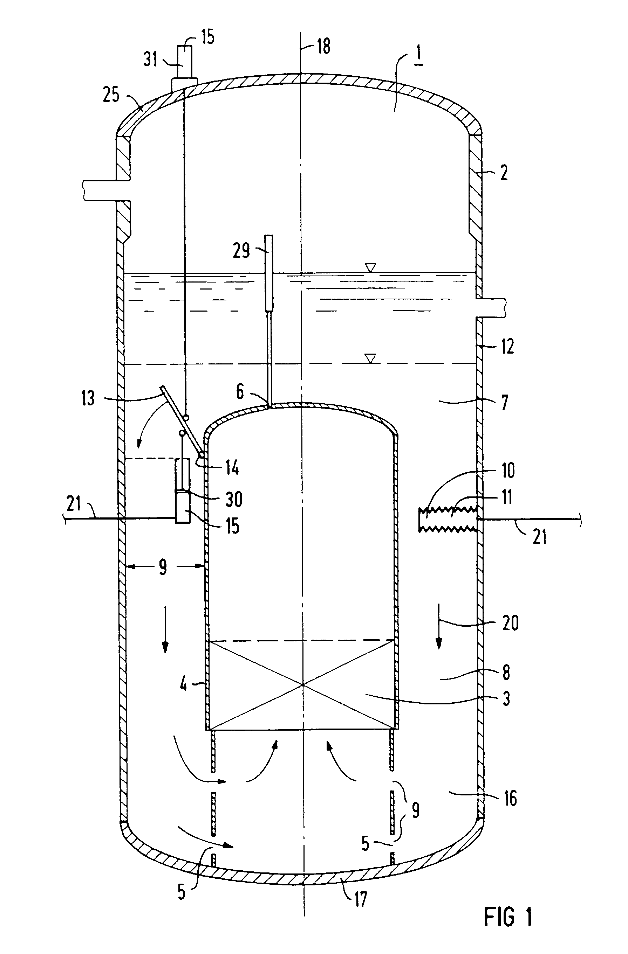

In FIG 1 ist ein Reaktordruckbehälter 2 eines Naturumlaufreaktors 1, insbesondere eines Siedewasserreaktors, dargestellt. Der Reaktordruckbehälter 2 hat einen Deckel 25 und einen Boden 17 und ist bezüglich einer Hauptachse 18 weitgehend rotationssymmetrisch. Innerhalb des Reaktordruckbehälters 2 ist ein Reaktorkern 3 angeordnet, welcher von einem Kernmantel 4 umgeben ist, welcher mit dem Boden 17 des Reaktordruckbehälters 2 verbunden und weitgehend rotationssymmetrisch zur Hauptachse 18 ist. In einem Bodenbereich 16 des Reaktordruckbehälters 2 unterhalb des Reaktorkerns 3 weist der Kernmantel 4 Eintrittsöffnungen 5 für Kernkühlmittel 7, Kühlwasser, auf. Der Reaktordruckbehälter 2 ist mit Kernkühlmittel 7 bis zu einem Niveau oberhalb des Kernmantels 4 gefüllt. Der Kernmantel 4 hat auf der dem Boden 17 des Reaktordruckbehälters 2 gegenüberliegenden Seite Austrittsöffnungen 6, an deren jede sich jeweils ein Dampfseparator 29 zur Trennung von Kernkühlmittel 7 und Kühlmitteldampf anschließt. Insgesamt sind beispielsweise 397 Separatoren 29 vorgesehen, von denen lediglich zur Veranschaulichung einer dargestellt ist. Zwischen dem Kernmantel 4 und einer Wand 12 des Reaktordruckbehälters 2 ist ein Strömungsweg 8 für Kernkühlmittel 7 gebildet, welcher sich durch die Eintrittsöffnung 5 hinweg in den Kernmantel 4 und den Reaktorkern 3 fortsetzt. Die Strömungsrichtung des in Naturumlauf befindlichen Kernkühlmittels 7 ist durch Strömungspfeile 20 angedeutet. Ein Strömungsquerschnitt 9 des Strömungsweges 8 ist entlang der Wand 12 durch die Fläche des Kreisringes zwischen der Wand 12 und dem Kernmantel 4 gebildet. Im Bodenbereich 16 des Reaktordruckbehälters 2 wird der Strömungsquerschnitt 9 durch die gesamte Fläche der Eintrittsöffnungen 5 bestimmt. Zwischen der Wand 12 und dem Kernmantel 4 ist ein Drosselelement 10 angeordnet, welches als ein balgartig ausgestalteter Schwellkörper 11 ausgebildet ist. Der Schwellkörper 11 ist mit einem Ende an der Wand 12 befestigt. Durch die Wand 12 ist eine Druckluftleitung 21 in den Schwellkörper 11 hineingeführt, durch die Druckluft zur Verlängerung bzw. Verkürzung des Schwellkörpers 11 eingeführt bzw. abgeführt werden kann. Eine andere Ausführung eines Drosselelementes 10 ist eine drehbare Klappe 13, die einen Drehpunkt 14 hat, welcher an dem Kernmantel 4 liegt. Unterhalb der drehbaren Klappe 13 ist eine Hebevorrichtung 15 mit einem druckbetreibbaren Kolben 30 dargestellt. Der Kolben 30 ist entlang der Richtung der Hauptachse 18 auf- und abwärts bewegbar. Er ist gelenkig mit der drehbaren Klappe 13 verbunden. Über eine Druckluftleitung 21 ist auf den Kolben 30 ein Druck aufbringbar, wodurch der Kolben 30 und somit auch die drehbare Klappe 13 bewegt werden. Die drehbare Klappe 13 ist alternativ mit einer Hebevorrichtung 15 bewegbar, die einen Klinkenschrittheber 31 aufweist. Der Klinkenschrittheber 31 ist außerhalb des Reaktordruckbehälters 2 auf dessen Deckel 25 angeordnet.

Beispielsweise aus Gründen der Redundanz können unterschiedliche Hebevorrichtungen 15 mit der drehbaren Klappen 13 verbunden sein. Durch ein Drosselelement 10, die drehbare Klappe 13 oder der Schwellkörper 11, wird der Strömungsquerschnitt 9 zwischen Kernmantel 4 und Wand 12 des Reaktordruckbehälters 2 eingestellt. Hierdurch erfolgt ohne Zwangsumwalzung durch Umwälzpumpen eine Regulierung des Kernkühlmitteldurchsatzes und dadurch eine Regulierung der Leistung des Siedewasserreaktors. Bei einer Steuerung in einem Störfall kann beispielsweise durch eine Verringerung des Strömungsquerschnittes 9 durch das Drosselelement 10 eine Leistungsreduktion der momentanen Leistung um 60 % erfolgen.

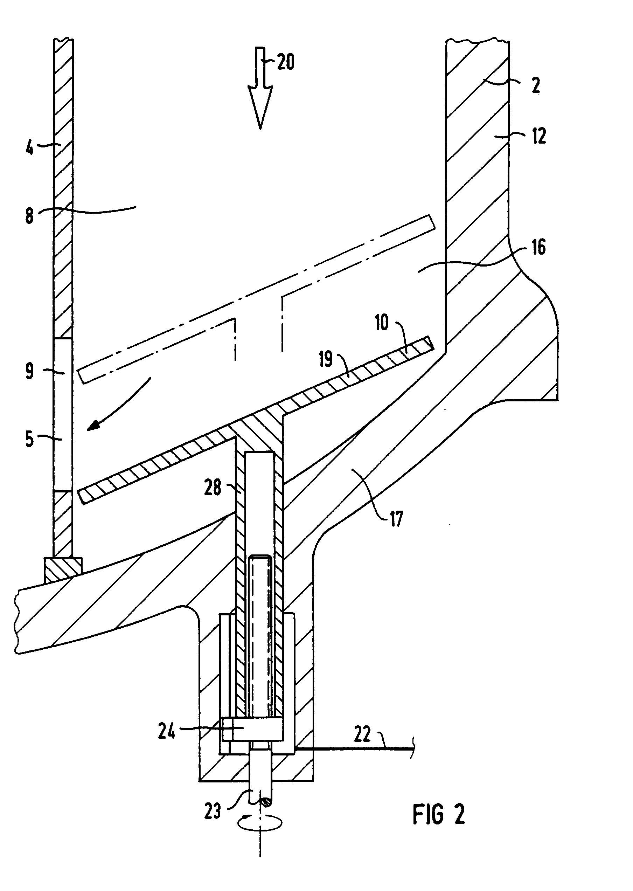

In FIG 2 ist ein Drosselelement 10 dargestellt, welches eine entlang der Hauptachse 18 bewegliche Platte 19 ist. Die Platte 19 ist gegenüber der Hauptachse 18 geneigt, wodurch sie in Art einer Leitschaufelplatte eine Umlenkung des Kernkühlmittels 7 bewirkt. Die Platte 19 ist in dem Bodenbereich 16 des Reaktordruckbehälters 2 angeordnet und bewirkt in der dargestellten Position ein Umlenken des Kernkühlmittels 7 in die Eintrittsöffnung 5 hinein. Von der dargestellten Position kann die Platte 19 entlang der Hauptachse 18 nach oben bewegt werden, wobei sie in der gestrichelt dargestellten Position liegt, und da sie zwischen dem Kernmantel 4 und der Wand 12 des Reaktordruckbehälters gestreckt ist, die Eintrittsöffnung 5 für das Kernkühlmittel 7 weitgehend versperrt. Die Platte 19 ist mit einem entlang der Hauptachse 18 gestreckten Hohlkolben 28 verbunden. Der Hohlkolben 28 ist durch einen nicht dargestellten, außerhalb des Reaktordruckbehälters 2 angeordneten elektrischen Spindelantrieb über eine Fahrspindel 23 und eine Fahrmutter 24 entlang der Hauptachse 18 verschiebbar. Alternativ zu einer elektrisch gesteuerten Verschiebung des Hohlkolbens 28 ist eine hydraulische Verschiebung über ein Hydraulikfluid, daß dem Hohlkolben 28 über eine Hydraulikleitung 22 zugeführt wird, möglich. Die verschiebliche Platte 19 ermöglicht somit ebenfalls auf einfache Art und Weise durch Veränderung des Strömungsquerschnittes 9 eine Regulierung des Kernkühlmitteldurchsatzes.

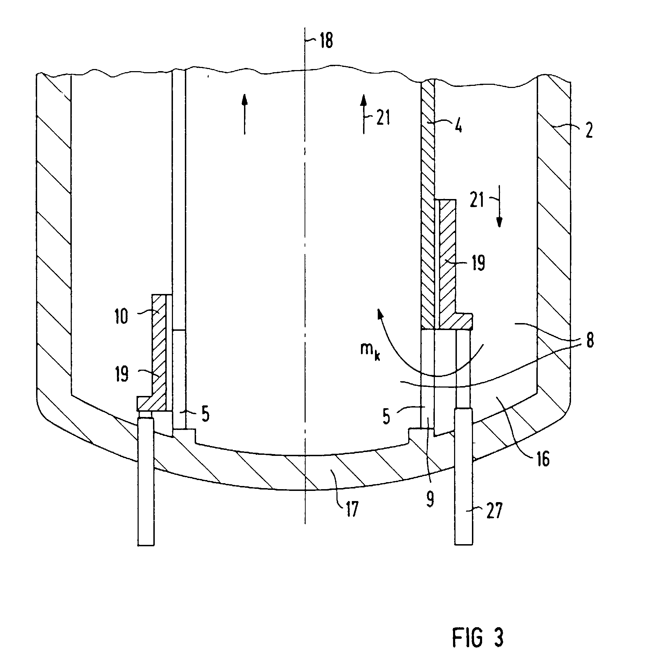

FIG 3 zeigt einen Ausschnitt des Reaktordruckbehälters 2 im Längsschnitt mit dem Bodenbereich 16. Der Kernmantel 4 hat unmittelbar in der Umgebung des Bodens 17 beidseitig der Hauptachse 18 jeweils eine Eintrittsöffnung 5. Zwischen Kernmantel 4 und Reaktordruckbehälter 2 ist an jeder Eintrittsöffnung 5 eine Platte 19 angeordnet, die entlang der Hauptachse 18 gestreckt ist. Jede Platte 19 ist durch den Boden 17 hindurch mit einem jeweiligen Schieberantrieb 27 außerhalb des Reaktordruckbehälters 2 verbunden. Die Platte 19 ist zwischen einer "Minimalöffnungs"-Stellung (siehe linke Platte 19), in der die Eintrittsöffnung 5 weitgehend verschlossen ist, und einer "Maximalöffnungs"-Stellung (siehe rechte Platte 19), in der die Eintrittsöffnung 5 vollständig geöffnet ist, entlang der Hauptachse 18 verschiebbar. Mit der die Eintrittsöffnung 5 verschließenden Platte 19 kann der Strömungsquerschnitt 9 des Strömungsweges 8 so verändert werden, daß eine Regulierung des Kernkühlmitteldurchsatzes und dadurch der Leistung des Naturumlaufreaktors beispielsweise in einem Bereich von 40 % - 100 % ermöglicht ist.

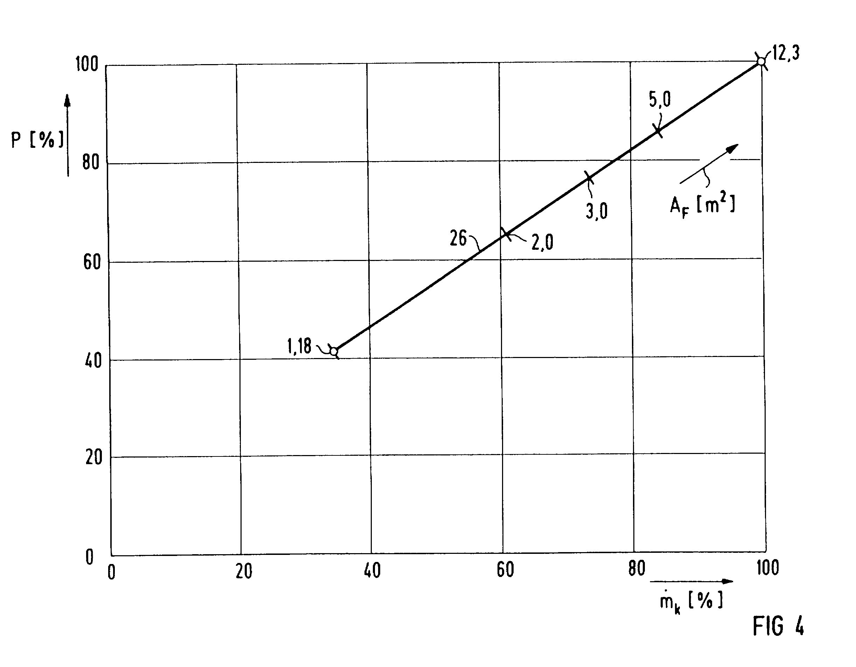

FIG 4 zeigt eine Reaktorumwälzregelkennlinie 26 in Abhängigkeit von der durch den Strömungsquerschnitt 9 zwischen dem Kernmantel 4 und der Wand 12 des Reaktordruckbehälters 2 gebildeten Fläche A_{F}. Der Reaktordruckbehälter 2 hat einen Durchmesser von etwa 7 m und der Kernmantel 4 einen Durchmesser von etwa 6 m, so daß der maximale Strömungsquerschnitt 9 zwischen Kernmantel 4 und Reaktordruckbehälter 2 etwa 12,3 m² beträgt. Bei einer Verringerung der Fläche A_{F} auf beispielsweise 1,18 m² sinkt der Kernkühlmitteldurchsatz *ṁ*ₖ auf unter 40 % und die thermische Leistung des Naturumlaufreaktors P auf etwa 40 %. Durch Reduzierung des Strömungsquerschnittes in einem Störfall auf etwa 10 % des maximalen Strömungsquerschnitts 9 kann somit eine Leistungsreduzierung um 60 % erreicht werden.

Die Erfindung zeichnet sich dadurch aus, daß in einem Strömungsweg für Kernkühlmittel zumindest ein Drosselelement angeordnet ist, mit dem der Strömungsquerschnitt des Strömungsweges veränderbar ist. Hierdurch ist auf einfache Art und Weise eine Regulierung des Kernkühlmitteldurchsatzes erreicht, wobei insbesondere bei einer schnellen Steuerung in einem Störfall der Strömungsquerschnitt soweit verringert werden kann, daß die Reaktorleistung um 60 % verringert wird. Eine Steuerung des Drosselelementes kann auf hydraulische, pneumatische oder elektrische Art und Weise beispielsweise über einen Druckkolben, einen Klinkenschrittheber oder einen elektrischen Spindelantrieb erfolgen. Die Regulierung des Kernkühlmitteldurchsatzes ist ebenfalls für einen Siedewasserreaktor mit einer hohen Leistung, beispielsweise von über 600 MW elektrischer Leistung, möglich. Gegenüber einer Zwangsumwalzung des Kernkühlmittels durch Umwälzpumpen ist die Regulierung des Kernkühlmitteldurchsatzes durch Drosselelemente weniger störanfällig. Insbesondere entfällt die Problematik möglicher Störfälle durch Rohrleitungsbrüche in den Rohrleitungen der Umwälzpumpen. Die Drosselelemente können passiv ausgestaltet sein, so daß bei einem Versagen ihres Antriebes automatisch eine Verringerung des Strömungsquerschnittes und damit eine Verringerung der Leistung des Naturumlaufreaktors erfolgt.

## Patentansprüche

1. Naturumlaufreaktor (1), insbesondere Siedewasserreaktor, mit einem Reaktordruckbehälter (2), einem Reaktorkern (3) und einem den Reaktorkern (3) umschließenden Kernmantel (4), welcher Kernmantel (4) innerhalb des Reaktordruckbehälters (2) angeordnet ist und mindestens eine Eintrittsöffnung (5) und eine Austrittsöffnung (6) für Kernkühlmittel (7) hat, wobei ein zwischen dem Kernmantel (4) und dem Reaktordruckbehälter (2) gebildeter und in den Kernmantel (4) durch die Eintrittsöffnung (5) führender Strömungsweg (8) für Kernkühlmittel (7) einen Strömungsquerschnitt (9) hat und in dem Strömungsweg (8) zumindest ein Drosselelement (10) angeordnet ist, durch welches der Strömungsquerschnitt (9) zur Regelung des Kernkühlmitteldurchsatzes veränderbar ist.

2. Naturumlaufreaktor (1) nach Anspruch 1, bei dem das Drosselelement (10) ein außerhalb des Kernmantels (4) angeordneter Schwellkörper (11) ist.

3. Naturumlaufreaktor (1) nach Anspruch 2, bei dem der Schwellkörper (11) durch ein Druckmedium, insbesondere Druckluft, aufschwellbar ist.

4. Naturumlaufreaktor (1) nach einem der vorhergehenden Ansprüche, bei dem das Drosselelement (10) an einer Wand (12) des Reaktordruckbehälters (2) befestigt ist.

5. Naturumlaufreaktor (1) nach Anspruch 1, bei dem das Drosselelement (10) eine um einen Drehpunkt (14) drehbare Klappe (13) ist.

6. Naturumlaufreaktor (1) nach Anspruch 5, bei dem der Drehpunkt (14) an dem Kernmantel (4) liegt.

7. Naturumlaufreaktor (1) nach einem der Ansprüche 5 oder 6, bei dem die Klappe (13) durch eine Hebevorrichtung (15), insbesondere mit einem druckluftbetreibbaren Kolben oder einem Klinkenschrittheber, bewegbar ist.

8. Naturumlaufreaktor (1) nach Anspruch 1, bei dem durch das Drosselelement (10) die Eintrittsöffnung (5) zumindest teilweise verschließbar ist.

9. Naturumlaufreaktor (1) nach Anspruch 8, bei dem die Eintrittsöffnung (5) in einem Bodenbereich (16) des Reaktordruckbehälters (2) angeordnet ist und das Drosselelement (10) durch den Boden (17) des Reaktordruckbehälters (2) hydraulisch, pneumatisch oder elektrisch gesteuert, insbesondere entlang einer Hauptachse (18) des Reaktordruckbehälcers (2), verschiebbar ist.

10. Naturumlaufreaktor (1) nach einem der Ansprüche 8 oder 9, bei dem das Drosselelement (10) eine Platte (19), insbesondere eine Leitschaufelplatte oder eine Schieberplatte, ist.

11. Verfahren zur Regulierung des Kernkühlmitteldurchsatzes durch einen Reaktorkern(3) eines Naturumlaufreaktors (1), insbesondere eines Siedewasserreaktors (1), mit einem Reaktordruckbehälter (2) und einem den Reaktorkern (3) umschließenden Kernmantel (A), welcher Kernmantel (4) innerhalb des Reaktordruckbehälters (2) angeordnet ist und mindestens eine Eintrittsöffnung (5) und eine Austrittsöffnung (6) für Kernkühlmittel (7) hat, wobei ein Strömungsquerschnitt (9) eines zwischen dem Kernmantel (4) und dem Reaktordruckbehälter (3) gebildeten und in den Kernmantel (4) durch die Eintrittsöffnung (5) weiterführenden Strömungsweges (8) durch zumindest ein Drosselelement (10) eingestellt wird.

## Claims

1. Natural circulation reactor (1), especially a boiling water reactor, with a reactor pressure vessel (2), a reactor core (3) and a core jacket (4) which surrounds the reactor core (3), is arranged within the reactor pressure vessel (2) and has at least one inlet port (5) and one outlet port (6) for core coolant (7), a flow path (8) for core coolant (7), formed between the core jacket (4) and the reactor pressure vessel (2) and leading through the inlet port (5) into the core jacket (4), having a flow cross section (9), and there being arranged in the flow path (8) at least one throttle element (10), by means of which the flow cross section (9) can be varied in order to regulate the core coolant flow rate.

2. Natural circulation reactor (1) according to Claim 1, wherein the throttle element (10) is a swelling body (11) arranged outside the core jacket (4).

3. Natural circulation reactor (1) according to Claim 2, wherein the swelling body (11) can be swelled by means of a pressure medium, especially compressed air.

4. Natural circulation reactor (1) according to one of the preceding claims, wherein the throttle element (10) is fastened to a wall (12) of the reactor pressure vessel (2).

5. Natural circulation reactor (1) according to Claim 1, wherein the throttle element (10) is a flap (13) rotatable about a centre of rotation (14).

6. Natural circulation reactor (1) according to claim 5, wherein the centre of rotation (14) is located on the core jacket (4).

7. Natural circulation reactor (1) according to one of Claims 5 or 6, wherein the flap (13) can be moved by means of a lifting device (15), in particular with a piston capable of being operated by compressed air or a ratchet jack.

8. Natural circulation reactor (1) according to Claim 1, wherein the inlet port (5) can be at least partially closed by means of the throttle element (10).

9. Natural circulation reactor (1) according to Claim 8, wherein the inlet port (5) is arranged in a bottom region (16) of the reactor pressure vessel (2) and the throttle element (10) can be displaced, in particular along a main axis (18) of the reactor pressure vessel (2), through the bottom (17) of the reactor pressure vessel (2) by hydraulic, pneumatic or electrical control.

10. Natural circulation reactor (1) according to one of Claims 8 or 9, wherein the throttle element (10) is a plate (19), especially a guide blade plate or a slide plate.

11. Method for regulating the core coolant flow rate through a reactor core (3) of a natural circulation reactor (1), especially of a boiling water reactor (1), with a reactor pressure vessel (2) and a core jacket (4) which surrounds the reactor core (3), is arranged within the reactor pressure vessel (2) and has at least one inlet port (5) and one outlet port (6) for core coolant (7), a flow cross section (9) of a flow path (8), formed between the core jacket (4) and the reactor pressure vessel (2) and leading further through the inlet port (5) into the core jacket (4), being set by means of at least one throttle element (10).

## Revendications

1. Réacteur (1) à circulation naturelle, notamment réacteur à eau bouillante comportant une cuve (2) sous pression de réacteur, un coeur (3) de réacteur et une enveloppe (4) de réacteur entourant le coeur (3) de réacteur, cette enveloppe (4) de réacteur étant disposée à l'intérieur de la cuve (2) sous pression de réacteur et ayant au moins un orifice (5) d'entrée et un orifice (6) de sortie pour du fluide (7) de refroidissement du coeur, un trajet (8) d'écoulement du fluide (7) de refroidissement du coeur formé entre l'enveloppe (4) du coeur et la cuve (2) sous pression du réacteur et menant dans l'enveloppe (4) du coeur en passant par l'orifice (5) d'entrée ayant une section transversale (9) d'écoulement et il est prévu dans le trajet (8) d'écoulement au moins un élément (10) d'étranglement par lequel la section transversale (9) d'écoulement peut être modifiée pour régler le débit du fluide de refroidissement du coeur.

2. Réacteur (1) à circulation naturelle suivant la revendication 1, dans lequel l'élément (10) d'étranglement est une pièce (11) gonflée disposée à l'extérieur de l'enveloppe (4) du réacteur.

3. Réacteur (1) à circulation naturelle suivant la revendication 2, dans lequel la pièce (11) gonflée peut être gonflée par un fluide sous pression notamment par de l'air comprimé.

4. Réacteur (1) à circulation naturelle suivant l'une des revendications précédentes, dans lequel l'élément (10) d'étranglement est fixé à une paroi (12) de la cuve (2) sous pression du réacteur.

5. Réacteur (1) à circulation naturelle suivant la revendication 1, dans lequel l'élément (10) d'étranglement est un volet (13) tournant par rapport à un point (14) de rotation.

6. Réacteur (1) à circulation naturelle suivant la revendication 5, dans lequel le point (14) de rotation se trouve sur l'enveloppe (4) du coeur.

7. Réacteur (1) à circulation naturelle suivant l'une des revendications 5 ou 6, dans lequel le volet (13) peut être déplacé par un dispositif (15) de levage, notamment par un piston pouvant être actionné par air comprimé ou par un dispositif de levage à pas à cliquet.

8. Réacteur (1) à circulation naturelle suivant la revendication 1, dans lequel l'orifice (5) d'entrée peut être fermé au moins partiellement par l'élément (10) d'étranglement.

9. Réacteur (1) à circulation naturelle suivant la revendication 8, dans lequel l'orifice (5) d'entrée est disposé dans une région (16) de fond de la cuve (2) sous pression du réacteur et l'élément (10) d'étranglement est commandé hydrauliquement, pneumatiquement ou électriquement à travers le fond (17) de la cuve (2) sous pression du réacteur en pouvant notamment coulisser le long d'un axe (18) principal de la cuve (2) sous pression du réacteur.

10. Réacteur (1) à circulation naturelle suivant l'une des revendications 8 ou 9, dans lequel l'élément (10) d'étranglement est un plateau (19) notamment un plateau à aubes directrices ou un plateau coulissant.

11. Procédé de régulation du débit du fluide de refroidissement du coeur (3) d'un réacteur (1) à circulation naturelle, notamment d'un réacteur (1) à eau bouillante, comprenant une cuve (2) sous pression de réacteur et une enveloppe (4) de coeur entourant le coeur (3) du réacteur, l'enveloppe (4) de coeur étant disposée à l'intérieur de la cuve (2) sous pression du réacteur et ayant un orifice (5) d'entrée et un orifice (6) de sortie du fluide (7) de refroidissement du coeur, une section transversale (9) d'écoulement d'un trajet (8) d'écoulement formé entre l'enveloppe (4) du coeur et la cuve (2) sous pression du réacteur et menant à l'enveloppe (4) du coeur en passant par l'orifice (5) d'entrée étant réglée par au moins un élément (10) d'étranglement.
